# EUROPÄISCHE PATENTANMELDUNG

(11) **EP 2 093 409 A2**
(43) Veröffentlichungstag der Anmeldung: **26.08.2009**
(21) Anmeldenummer: 09153496.6
(22) Anmeldetag: 24.02.2009
(51) Int. Cl.: F02K 9/97

(54) **Düsenerweiterung und Verfahren zur Herstellung einer Düsenerweiterung**

(30) Priorität: 25.02.2008 DE 102008011502
(71) Anmelder: Deutches Zentrum für Luft- und Ramfahrt e. V., 51147 Köln (DE)
(72) Erfinder: Suslov, Dmitry, 74219, Möckmühl (DE); Arnold, Richard, 73430, Aalen (DE); Oschwald, Michael, 74074, Heilbronn (DE)
(74) Vertreter: Hoeger, Stellrecht & Partner Patentanwälte

(57) **Zusammenfassung**

Es wird eine Düsenerweiterung und Verfahren zur Herstellung einder Düsenerweiterung für ein Raketentriebwerk bereitgestellt, mit einem Düsenmantel (62), der einen Strömungsquerschnitt (58) begrenzt, welcher sich von einem Düsenerweiterungseingang (50) hin zu einem Düsenerweiterungsausgang (52) erweitert, wobei der Düsenerweiterungseingang mit einem Brennkammerausgang einer Brennkammer eines Raketentriebwerks verbindbar ist, wobei der Düsenmantel mindestens einen umfangsseitig geschlossenen Kühlkanal (36) aufweist, und ein erstes Mantelelement (26) und ein zweites Mantelelement (66) umfasst, welche gemeinsam den mindestens einen Kühlkanal begrenzen, wobei das erste Mantelelement einstückig ist, das erste Mantelelement mindestens eine Materialaussparung (34) aufweist, welche den mindestens einen Kühlkanal bildet, das zweite Mantelelement mittels galvanischen Auftrags auf das erste Mantelelement hergestellt ist und das erste Mantelelement aus einer Nickellegierung und das zweite Mantelelement aus Nickel hergestellt ist.

## Beschreibung

Die Erfindung betrifft eine Düsenerweiterung für ein Raketentriebwerk, mit einem Düsenmantel, der einen Strömungsquerschnitt begrenzt, welcher sich von einem Düsenerweiterungseingang hin zu einem Düsenerweiterungsausgang erweitert, wobei der Düsenerweiterungseingang mit einem Brennkammerausgang einer Brennkammer eines Raketentriebwerks verbindbar ist, und wobei der Düsenmantel mindestens einen umfangsseitig geschlossenen Kühlkanal aufweist, und ein erstes Mantelelement und ein zweites Mantelelement umfasst, welche gemeinsam den mindestens einen Kühlkanal begrenzen.

Die Erfindung betrifft ferner ein Verfahren zur Herstellung einer Düsenerweiterung für ein Raketentriebwerk, mit einem Düsenmantel, welcher mindestens einen umfangsseitig geschlossenen Kühlkanal aufweist und mindestens ein erstes Mantelelement und mindestens ein zweites Mantelelement umfasst, welche gemeinsam den mindestens einen Kühlkanal begrenzen.

Aus der US 6,467,253 B1 ist eine Düsenstruktur für Raketendüsen bekannt, welche eine Vielzahl von Kühlkanälen aufweist. Diese Düsenstruktur umfasst eine Düsenwand, welche aus mehreren Wandteilen zusammengesetzt ist, die sich von einem Einlass hin zu einem Auslass der Düsenstruktur erstrecken und längsseits miteinander verbunden sind.

Aus der DE 2 015 024 ist ein Verfahren zur Herstellung von in Längsrichtung verlaufende Kühlkanäle aufweisenden Brennkammern und/oder Schubdüsen von Flüssigkeitsraketen auf galvanoplastischem Weg unter Zuhilfenahme eines wiederverwendbaren, gegebenenfalls geteilten Galvanisierkerns bekannt.

Aus der EP 0 374 382 A1 ist eine Wandstruktur zur Durchführung eines Kühlungsverfahrens von heißgasbeaufschlagten Wänden von Strömungskanälen bekannt, welche heißgasseitig aus dünnwandigen, aneinander grenzenden und miteinander verbundenen Röhrchen besteht, welche über die Länge ihres jeweiligen Querbereichs konstante Querschnitte aufweisen und auf der heißgasabgewandten Seite aus einem im Wesentlichen mechanisch belasteten, ein-oder mehrteiligen Stützelement besteht.

Aus der DE 1 916 245 ist eine Brennkammer mit Schubdüse von Flüssigkeitsraketentriebwerken bekannt, bestehend aus einem Brennkammer-Schubdüsengrundkörper mit durchlaufenden Kühlkanälen, die durch eine Außenwand abgedeckt sind und von mindestens einer Treibstoffkomponente durchströmt werden. Der Grundkörper ist aus praktisch sauerstofffreiem Kupfer oder bezüglich seiner Wärmeleitfähigkeit gleichwertigen Material, wie Silber oder Molipden, hergestellt und die Außenwand ist aufgalvanisiert.

Aus der DE 41 15 403 A1 ist eine Düsenwand für Expansionsrampen und Heißgasdüsen bekannt, deren Innenstruktur aus einer vom Heißgas beaufschlagten Wärmeleitschicht und einer hitzebeständigen Gleitschicht besteht.

Aus der DE 101 26 923 A1 ist ein Raketentriebwerk mit einem Außenmantel und einem Innenmantel bekannt, wobei der Innenmantel von dem Außenmantel beabstandet angeordnet ist, und der Innenmantel eine Brennkammer bildet und eine an dem Ausstoß von Antriebsmittel aus der Brennkammer angepasste Kontur mit einer Ansteuerung zur Ausbildung als Brennkammerhals aufweist.

Aus der DE 40 15 204 A1 ist eine Schubdüse für ein Flugtriebwerk bekannt, das einen inneren, mit einer Anzahl von Kühlkanälen durchsetzten Mantel aus wärmeleitendem Werkstoff, einem äußeren, den inneren Mantel umgebenden festen Stützmantel und eine dazwischenliegende Zwischenschicht aufweist. Der innere Mantel ist mit dem Stützmantel über eine eingegossene Zwischenschicht auswechselbar verbunden.

Aus der DE 100 43 303 B4 ist ein Verfahren zur Herstellung eines Raketentriebwerkes bekannt, bei dem mindestens zwei anteilige Segmentkörper hergestellt werden und vor dem Zusammenfügen der Segmentkörper mehrere Kühlkanäle und/oder mehrere Rillen oder Rippen in den Segmentkörpern geformt werden.

Aus der EP 1 391 604 A2 ist eine Brennkammerstruktur aus einem Brennkammerliner mit Kühlkanälen und mindestens einem Manifold zum Zu- und Abführen eines Kühlmittels bekannt, wobei der von dem Manifold unbedeckte Bereich des Brennkammerliners mit einem galvanisch aufgebrachten Stützmantel beschichtet ist. Das Manifold ist mit dem Brennkammerliner verlötet.

Aus der DE 1 264 160 ist ein Verfahren zur Herstellung flüssigkeitsgekühlten Bauteilen bekannt.

Aus der GB 1 268 547 ist ein Verfahren zum Bedecken und Versiegeln von Kühlkanälen von Brennkammern bekannt.

Der vorliegenden Erfindung liegt die Aufgabe zu Grunde, eine Düsenerweiterung für ein Raketentriebwerk zu schaffen, welche minimierte Restspannungen aufweist.

Diese Aufgabe wird bei einer Düsenerweiterung der eingangs genannten Art erfindungsgemäß dadurch gelöst, dass das erste Mantelelement einstückig ist, dass das erste Mantelelement mindestens eine Materialaussparung aufweist, welche den mindestens einen Kühlkanal bildet, dass das zweite Mantelelement mittels galvanischem Auftrag auf das erste Mantelelement hergestellt ist und dass das erste Mantelelement aus einer Nickellegierung und das zweite Mantelelement aus Nickel hergestellt ist.

Die erfindungsgemäße Düsenerweiterung ermöglicht eine einfache Herstellung einer mittels eines Kühlfluids, beispielsweise mittels eines Treibstoffs, gekühlten Expansionsdüse. Durch den galvanischen Auftrag des zweiten Mantelelements kann eine Kühlkanalbegrenzung hergestellt werden, welche den Kühlkanal umfangsseitig verschließt.

Der galvanische Auftrag des zweiten Mantelelements ermöglicht es, das zweite Mantelelement galvanotechnisch zu formen und es gleichzeitig, im Rahmen der Herstellung, direkt oder indirekt mit dem ersten Mantelelement zu verbinden.

Bei einem direkten galvanischen Auftrag wird das zweite Mantelelement auf das erste Mantelelement aufgalvanisiert. Bei einem indirekten galvanischen Auftrag wird das zweite Mantelelement auf ein Zusatzelement aufgetragen, welches mit dem ersten Mantelelement verbunden ist oder wird.

Die galvanotechnische Herstellung des zweiten Mantelelements ermöglicht es, eine besonders spannungsarme und gleichzeitig mechanisch stabile Düsenerweiterung zu schaffen. Die galvanotechnische Herstellung des zweiten Mantelelements ist ein "kaltes" Herstellungsverfahren beispielsweise im Gegensatz zum Schweißen oder Löten. Es muss auch keine plastische Verformung erfolgen. Dadurch wird ein integrales Bauteil bereitgestellt, welches minimierte Restspannungen aufweist. Die Restspannungen lassen sich beispielsweise weithin eliminieren, wenn das erste Mantelelement insbesondere vor seiner Endbearbeitung (wie Ausfräsen des mindestens einen Kühlkanals) spannungsfrei geglüht wird, das heißt so geglüht wird, dass Restspannungen minimiert werden und durch die galvanische Herstellung des zweiten Mantelelements werden keine neuen Spannungen erzeugt.

Es ergeben sich konstruktionstechnische Freiheiten bei der Gestaltung und Auslegung der Kühlkanalgeometrie, sodass die Düsenerweiterung sich besonders effizient kühlen lässt und somit extrem hohen thermischen Belastungen ausgesetzt werden kann. Beispielsweise ermöglicht es der stabile Verbund der Mantelelemente, die Geometrie der Kühlkanäle hinsichtlich ihrer Höhe, ihrer Breite, ihres Abstands zu einem benachbarten Kühlkanal und/oder ihres Verlaufs entlang des Düsenmantels optimal auslegen zu können. Vorzugsweise ist der Abstand zwischen zueinander benachbarten Kühlkanälen relativ klein, was insbesondere bei Verwendung von Mantelmaterialien mit niedriger Wärmeleitfähigkeit vorteilhaft ist.

Da die Restspannungen minimiert sind, lässt sich die entsprechende Düsenerweiterung bei hohen Temperaturen einsetzen (Strukturtemperaturen über 1000°C sind bei dem Einsatz im Zusammenhang mit Raketentriebwerken typisch). Durch die Minimierung von Restspannungen sind auch erhebliche Deformationen beim "Hochtemperatureinsatz" einschließlich der Gefahr des Versagens der Düsenerweiterung vermieden. Insbesondere ist bei der erfindungsgemäßen Düsenerweiterung sichergestellt, dass während des Herstellungsverfahrens keine lokalen Überhitzungen (wie beispielsweise beim Schweißprozess an der Stelle der Schweißnähte) auftreten können und das Grundmaterial als Träger des zweiten Mantelelements nicht plastisch verformt werden muss.

Darüber hinaus besteht die Möglichkeit, die Rauhigkeit der Kühlkanalbegrenzungen einzustellen, um das Strömungsverhalten in einem Kühlkanal zu beeinflussen.

Der erfindungsgemäße Aufbau der Düsenerweiterung ermöglicht es bei einem relativ geringen Materialeinsatz, eine hochfeste Struktur mit relativ geringer Masse zu schaffen. Durch den spannungsarmen Aufbau kann zudem verhindert werden, dass sich die Düsenerweiterung während des Betriebes verformt und/oder in ihrer Struktur geschwächt wird.

Ferner ist es bei der erfindungsgemäßen Düsenerweiterung aufgrund ihrer mechanisch stabilen Struktur besonders einfach, Messvorrichtungen an der Düsenerweiterung anzuordnen oder Messvorrichtungen in die Düsenerweiterung zu integrieren, ohne dabei die Struktur der Düsenerweiterung zu schwächen.

Die erfindungsgemäße Düsenerweiterung ermöglicht insgesamt eine einfache und robuste Bauweise sowie eine gute Handhabbarkeit der Düsenerweiterung, beispielsweise während der Montage eines Raketentriebwerkes.

Der Düsenmantel der erfindungsgemäßen Düsenerweiterung lässt sich im Idealfall aus nur zwei Mantelelementen herstellen. Dies ermöglicht eine sehr schnelle und kostenoptimierte Herstellung der Düsenerweiterung.

Das erste Mantelelement ist einstückig. Dies ermöglicht eine einfache Herstellbarkeit eines hochstabilen ersten Mantelelements. Hierbei können urformende Verfahren, beispielsweise Gießen, oder Material abtragende Verfahren, beispielsweise Drehen und/oder Fräsen eingesetzt werden.

Das erste Mantelelement ist aus einer Nickellegierung und insbesondere Nickelbasislegierung hergestellt und das zweite Mantelelement ist aus Nickel hergestellt. Nickellegierungen und insbesondere Nickelbasislegierungen wie beispielsweise NiCr15Fe (Inconel 600) sind sehr temperaturbeständig.

Bei der galvanischen Herstellung von Strukturen sind Mikroeinschlüsse von Elektrolyt kaum vermeidbar. Bei der Erhitzung kann dies zur Zerstörung der Struktur führen. Bei der erfindungsgemäßen Lösung ist das erste Mantelelement direkt einer Heißgasströmung ausgesetzt, während das galvanisch hergestellte zweite Mantelelement auf der "kalten" Seite liegt. Die Gesamtstruktur kann dadurch hohe mechanische Lasten ertragen. Wenn für das erste Mantelelement eine Nickellegierung und für das zweite Mantelelement Nickel verwendet wird, dann wird dadurch eine feste und zuverlässige Verbindung zwischen dem ersten Mantelelement und dem zweiten Mantelelement erreicht.

Hitzebeständige Nickellegierungen (insbesondere Nickelbasislegierungen) erlauben zulässige Wandtemperaturen in der Größenordnung von 1700 K im Vergleich zu anderen gut wärmeleitenden Materialien wie Kupfer oder Silber, bei denen die zulässige Wandtemperatur 900 K oder weniger beträgt. Durch die Verwendung von Nickellegierungen, die eine geringere Wärmeleitfähigkeit als beispielsweise Kupfer oder Silber aufweisen, lässt sich auch der Kühlmassenstrom geringer halten.

Besonders bevorzugt ist es, wenn das erste Mantelelement aus einem Umformteil hergestellt ist. Dies ermöglicht es, den Verlauf des Strömungsquerschnitts, welcher sich von dem Düsenerweiterungseingang hin zu dem Düsenerweiterungsausgang erweitert in einfacher Weise und gut reproduzierbar einzustellen. Ein solcher Umformvorgang umfasst insbesondere das Drücken oder Ziehen eines Rohlings. Durch den Umformvorgang lassen sich außerdem Materialverfestigungseffekte erzielen.

Insbesondere weist das erste Mantelelement mindestens eine Materialaussparung auf, welche einen Teil des mindestens einen Kühlkanals begrenzt. Dies ermöglicht eine einfache Definition der Geometrie eines Teils des mindestens einen Kühlkanals.

Besonders bevorzugt ist es, wenn die mindestens eine Materialaussparung durch Austrag aus einem massiven Material hergestellt ist. Dies ermöglicht eine besonders einfache Herstellung eines Teils des Kühlkanals. Insbesondere bei einer spanenden, vorzugsweise fräsenden Bearbeitung des massiven Materials lässt sich schnell und einfach eine optimale Kühlkanalgeometrie herstellen. Gegebenenfalls kann das erste Mantelelement während des Materialaustrags oder an einen Materialaustrag anschließend auch thermisch behandelt werden, um gegebenenfalls entstehende oder entstandene Materialspannungen zu beseitigen. Insbesondere kann das erste Mantelelement einem Ausglühvorgang unterzogen werden.

Vorzugsweise ist das erste Mantelelement aus einem Material hergestellt, welches zumindest einen Anteil von Metall enthält. Hierdurch kann ein stabiles Mantelelement bereitgestellt werden, welches außerdem elektrisch leitfähig ist, sodass ein direkter galvanischer Auftrag des zweiten Mantelelements auf das erste Mantelelement ermöglicht ist.

Besonders bevorzugt ist es, wenn das erste Mantelelement aus einem Material hergestellt ist, welches zumindest einen Anteil von Nickel enthält. Nickel zeichnet sich durch eine hohe mechanische Festigkeit, eine hohe Oxidationsbeständigkeit sowie durch eine hohe Temperaturbeständigkeit aus. Hierbei ist es insbesondere vorteilhaft, wenn der Anteil von Nickel zwischen ungefähr 60% bis 80% beträgt.

Ferner ist es bevorzugt, wenn der Anteil von Nickel des Materials des ersten Mantelelements mindestens ungefähr 70% beträgt. Beispielsweise können nickelbasierte Legierungen eingesetzt werden, welche unter den Handelsbezeichnungen Inconel oder Hastelloy vertrieben werden.

Nach einer weiteren vorteilhaften Ausführungsform der Erfindung beträgt der Anteil von Nickel des zweiten Mantelelements mindestens ungefähr 95%. Bei einer weiteren bevorzugten Ausführungsform ist das zweite Mantelelement zumindest im Wesentlichen vollständig aus Nickel hergestellt.

Vorteilhaft ist es ferner, wenn das erste Mantelelement und das zweite Mantelelement jeweils aus einem Material hergestellt sind, welches jeweils einen Anteil von Nickel von mindestens ungefähr 70% enthält. Hierdurch kann ein hochstabiler, auch bei hoher thermischer Belastung spannungsarmer Verbund aus dem ersten Mantelelement und dem zweiten Mantelelement hergestellt werden.

Bevorzugt ist es ferner, wenn das erste Mantelelement bezogen auf das zweite Mantelelement radial innen angeordnet ist. Hierbei ist das erste Mantelelement einer höheren thermischen Belastung ausgesetzt als das zweite Mantelelement, sodass das erste Mantelelement im Hinblick auf die thermische Belastbarkeit optimiert werden kann. Das zweite Mantelelement ist thermisch geringer belastet und kann somit im Hinblick auf die Aufnahme struktureller Belastungen, die durch Schub- oder Seitenkräfte entstehen, optimiert werden.

Vorteilhaft ist es, wenn das erste Mantelelement ein Innenteil des Düsenmantels bildet. Dies ermöglicht einen unmittelbaren Wärmeabtransport von einer Innenseite des ersten Mantelelements hin zu dem mindestens einen Kühlkanal.

Günstig ist es ferner, wenn das zweite Mantelelement ein Außenteil des Düsenmantels bildet. Hierdurch kann ein direkter Wärmeabtransport von dem mindestens einen Kühlkanal hin zu einer Außenseite des Düsenmantels gewährleistet werden.

Besonders vorteilhaft ist es, wenn das zweite Mantelelement eine Schichtstärke von mindestens ungefähr 1 mm aufweist, beispielsweise zwischen ungefähr 3 mm und 5 mm. Dies ermöglicht es, ein ausreichend stabiles zweites Mantelelement herzustellen, welches sich gleichzeitig durch eine leichte Bauweise kennzeichnet.

Nach einer vorteilhaften Ausführungsform der Erfindung ist vorgesehen, dass das Flächenverhältnis zwischen dem Düsenerweiterungsausgang und dem Düsenerweiterungseingang zwischen 20:1 und 2:1 beträgt.

Nach einer weiteren vorteilhaften Ausführungsform der Erfindung ist eine Kühlfluidversorgungseinrichtung zur Versorgung des mindestens einen Kühlkanals mit einem Kühlfluid vorgesehen. Bei diesem Kühlfluid handelt es sich insbesondere um einen Treibstoff, welcher auch in einer der Düsenerweiterung vorgeschalteten Brennkammer verbrannt wird.

Nach einer vorteilhaften Ausführungsform der Erfindung umfasst die Kühlfluidversorgungseinrichtung eine Verteilereinrichtung, welche mit einer Mehrzahl von Kühlkanälen fluidwirksam verbunden ist. Dies ermöglicht eine einfache Einleitung des Kühlfluids in eine Mehrzahl von Kühlkanälen.

Bevorzugt ist es, wenn der mindestens eine Kühlkanal mindestens eine Kühlkanalöffnung aufweist, aus welcher das Kühlfluid aus dem Kühlkanal abführbar ist. Dies ermöglicht eine einfache Abführung eines erwärmten Kühlfluids.

Nach einer weiteren vorteilhaften Ausführungsform der Erfindung ist eine Diffusoreinrichtung vorgesehen, welche sich von einem Diffusoreinrichtungseingang hin zu einem Diffusoreinrichtungsausgang erweitert, wobei der Diffusoreinrichtungseingang strömungswirksam mit dem Düsenerweiterungsausgang verbindbar ist. Insbesondere ist es bevorzugt, wenn eine solche Diffusoreinrichtung film- und/oder strahlungsgekühlt ist. Beispielsweise kann zur Kühlung der Diffusoreinrichtung erwärmtes Kühlfluid verwendet werden, welches aus dem mindestens einen Kühlkanal der Düsenerweiterung abgeführt wird.

Ferner ist es bevorzugt, wenn mindestens eine Verbindungseinrichtung zur Verbindung der Düsenerweiterung mit der Diffusoreinrichtung vorgesehen ist, sodass die Düsenerweiterung und die Diffusoreinrichtung als separate Teile hergestellt und anschließend miteinander verbunden werden können.

Der Erfindung liegt ausgehend von dem eingangs genannten Verfahren ferner die Aufgabe zu Grunde, ein Verfahren anzugeben, mittels welchem eine Düsenerweiterung mit minimierter Restspannung herstellbar ist.

Diese Aufgabe wird bei einem vorstehend genannten Verfahren erfindungsgemäß dadurch gelöst, dass das erste Mantelelement einstückig ist, dass erste Mantelelement aus einer Nickellegierung und das zweite Mantelelement aus Nickel hergestellt wird, dass das zweite Mantelelement mittels galvanischem Auftrag auf das erste Mantelelement hergestellt wird und dass das erste Mantelelement mindestens eine Materialaussparung aufweist, welche den mindestens einen Kühlkanal bildet.

Besondere Ausgestaltungen des erfindungsgemäßen Verfahrens und deren Vorteile sind zum Teil bereits vorstehend im Zusammenhang mit den besonderen Ausgestaltungen der erfindungsgemäßen Düsenerweiterung erläutert worden.

Bevorzugt ist es, wenn ein umfangsseitig offener Kühlkanal des ersten Mantelelements vor Herstellung des zweiten Mantelelements mit einem Hilfsmaterial verfüllt wird. Das Volumen, das von dem Hilfsmaterial beansprucht wird, steht für eine Ablagerung des Materials des zweiten Mantelelements nicht zur Verfügung. Auf diese Weise kann die Geometrie eines Kühlkanals in besonders einfacher Weise definiert werden.

Ferner ist es bevorzugt, wenn das Hilfsmaterial nach Herstellung des zweiten Mantelelements aus dem mindestens einen umfangseitig geschlossenen Kühlkanal entfernt wird. Auf diese Weise kann ein Hohlraum geschaffen werden, der zur Durchströmung mit einem Kühlfluid geeignet ist.

Besonders bevorzugt ist, wenn das Hilfsmaterial elektrisch leitfähig ist. Dies ermöglicht einen galvanischen Auftrag des Materials des zweiten Mantelelements auf eine Oberfläche des Hilfsmaterials.

Nach einer Ausführungsform der Erfindung ist das Hilfsmaterial ein Wachsmaterial. Ein solches Wachsmaterial ist bei Raumtemperatur formstabil, kann jedoch mittels eines Wärmeeintrags leicht aus einem umfangseitig geschlossenen Kühlkanal entfernt werden.

Ferner ist es bevorzugt, wenn zusätzlich zu dem Hilfsmaterial ein elektrisch leitfähiges Zusatzmaterial verwendet wird. Hierbei kann es sich beispielsweise um ein Metallpulver und/oder um einen Leitlack handeln.

Ganz besonders vorteilhaft ist es, wenn das erste Mantelelement zur Elimination von Restspannungen geglüht wird. Insbesondere erfolgt dieses "spannungsfreie" Glühen vor der Endbearbeitung und insbesondere vor der Herstellung des mindestens einen Kühlkanals beispielsweise durch spanabhebende Bearbeitung. Dadurch lässt sich eine Düsenerweiterung mit minimiertem Restspannungsanteil herstellen.

Weitere Merkmale und Vorteile der Erfindung sind Gegenstand der nachfolgenden Beschreibung und der zeichnerischen Darstellung eines bevorzugten Ausführungsbeispiels.

In den Zeichnungen zeigen:
- Fig. 1: eine perspektivische Ansicht eines Umformteils, mittels welchem ein erstes Mantelelement einer Düsenerweiterung herstellbar ist;
- Fig. 2: eine perspektivische Ansicht eines ersten Mantelelements einer Düsenerweiterung; und
- Fig. 3: einen Längsschnitt einer Düsenerweiterung, welche mit einer Diffusoreinrichtung verbunden ist.

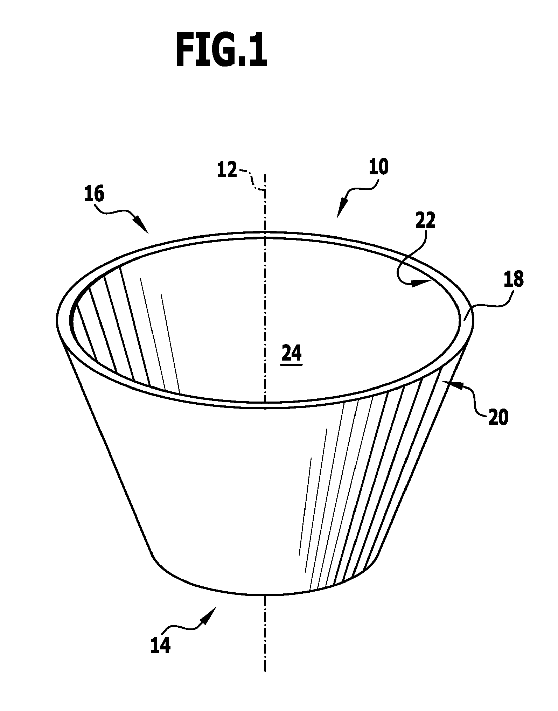

Ein Ausführungsbeispiel eines insbesondere einstückigen Umformteils ist in der Figur 1 dargestellt und dort mit dem Bezugszeichen 10 bezeichnet.

Das Umformteil 10 erstreckt sich entlang einer Achse 12 zwischen einem ersten Ende 14 und einem zweiten Ende 16.

Das Umformteil 10 weist eine im Wesentlichen trichterförmige oder kegelstumpfförmige Wand 18 auf, welche eine Außenseite 20 und eine Innenseite 22 des Umformteils 10 bildet.

Die Wand 18 weist eine im Wesentlichen konstante Wandstärke auf. Die Wand 18 weist einen sich von dem ersten Ende 14 hin zu dem zweiten Ende 16 erweiternden Verlauf auf.

Die Innenseite 22 der Wand 18 begrenzt einen Innenraum 24 des Umformteils 10.

Die Wand 18 des Umformteils 10 ist aus einem metallischen Material und insbesondere einer Nickellegierung hergestellt, welche vorzugsweise einen Nickelanteil von mindestens ungefähr 70% enthält (wie beispielsweise NiCr15Fe [Inconel 600]).

Das Umformteil 10 ist vorzugsweise mittels eines Zieh- und/oder Drückverfahrens hergestellt.

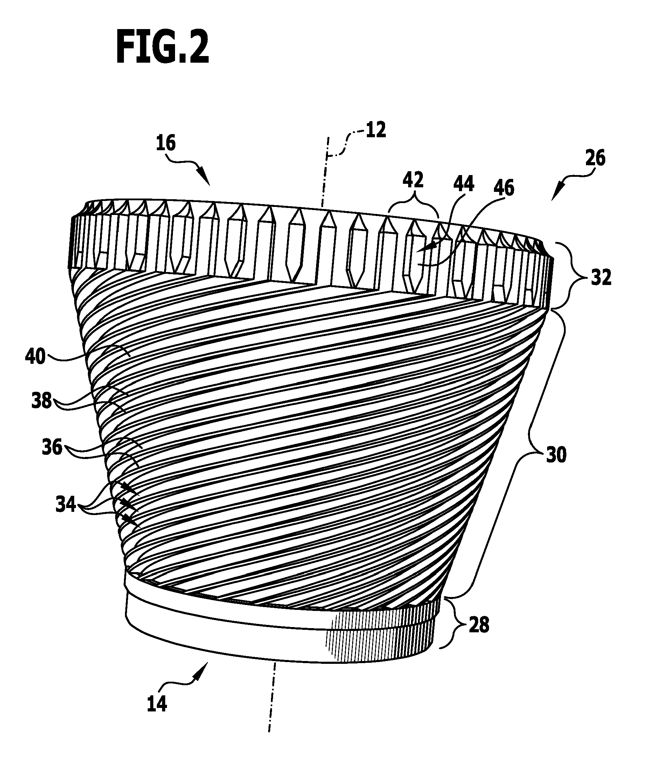

In Figur 2 ist ein Ausführungsbeispiel eines ersten Mantelelements 26 zur Verwendung bei einer Düsenerweiterung dargestellt. Das erste Mantelelement 26 erstreckt sich entlang einer Achse 12, welche der Achse 12 des Umformteils 10 entspricht, zwischen einem ersten Ende 14 und einem zweiten Ende 16, welche den jeweiligen Enden 14, 16 des Umformteils 10 entsprechen.

Das erste Mantelelement 26 weist an seinem ersten Ende 14 einen eingangsseitigen Randabschnitt 28 auf. Das erste Mantelelement 26 weist ferner an seinem zweiten Ende 16 einen ausgangsseitigen Randabschnitt 32 auf. Das erste Mantelelement weist ferner einen mittleren Abschnitt 30 auf, welcher zwischen den Randabschnitten 28 und 32 angeordnet ist.

Der Randabschnitt 28 ist im Wesentlichen ringförmig ausgebildet. Der mittlere Abschnitt 30 weist eine Mehrzahl von Materialaussparungen 34 auf, welche sich spiralförmig an der Außenseite des mittleren Abschnitts 30 zwischen den Randabschnitten 28 und 32 erstrecken und umfangseitig offene Kühlkanäle 36 bilden.

Ein Kühlkanal 36 ist jeweils durch zueinander benachbarte, bezogen auf die Achse 12 sich nach radial außen erstreckende Materialstege 38 begrenzt sowie durch eine bodenseitige Kühlkanalbegrenzung 40.

Die Kühlkanäle 36 münden an dem ausgangsseitigen Randabschnitt 32 des ersten Mantelelements an einer Kühlkanalöffnung 42. Der ausgangseitige Randabschnitt 32 weist mindestens einen Kühlkanaleinsatz 44 auf, welcher innerhalb eines umfangseitig offenen Kühlkanals 36 angeordnet ist. Der Kühlkanaleinsatz 44 ist in Form eines Stegs ausgebildet, dessen Stegbreite sich entlang der Achse 12 gesehen ausgehend von dem mittleren Abschnitt 30 erweitert und hin zu der Kühlkanalöffnung 42 wieder verjüngt.

Das erste Mantelelement 26 ist vorzugsweise hergestellt, indem das Umformteil 10 (siehe Figur 1) spanend, insbesondere fräsend bearbeitet wird. Auf diese Weise kann die Geometrie der Abschnitte 28, 30 und 32 und insbesondere der Verlauf und die Gestaltung der Kühlkanäle 36 definiert werden. Während der spanenden Bearbeitung eines Umformteils 10 ist es möglich, die Kühlkanalbegrenzungen, welche durch Seitenflächen der Materialstege 38 sowie durch die bodenseitigen Kühlkanalbegrenzungen 40 gebildet sind, in ihrer Rauhigkeit einzustellen, beispielsweise durch Auswahl der Fräswerkzeuge und/oder durch Einstellung der Fräsparameter.

Das erste Mantelelement 26 wird vor der Endbearbeitung geglüht, um Restspannungen zu minimieren. Insbesondere erfolgt das "spannungsfreie" Glühen vor der Herstellung der Kühlkanäle 36.

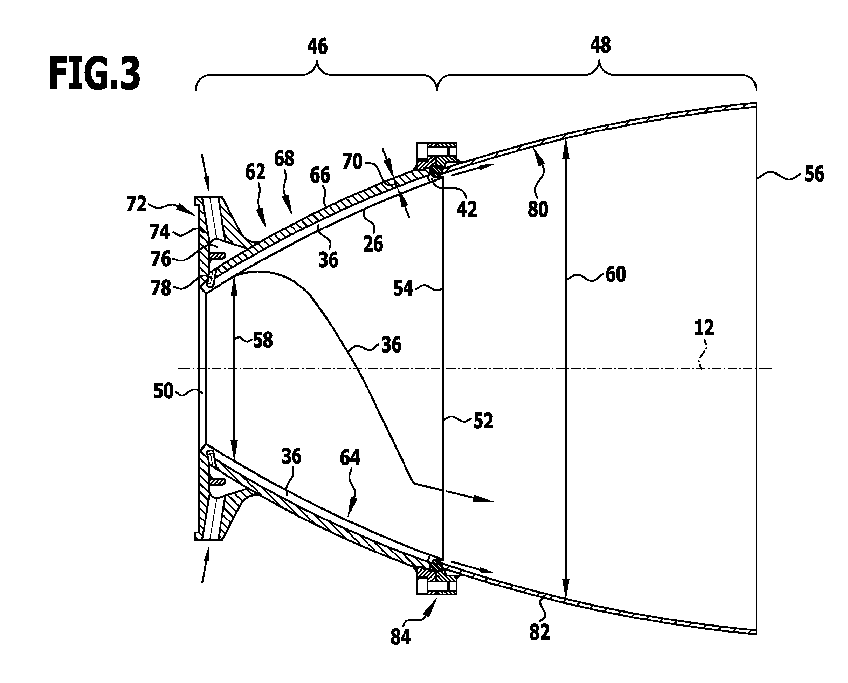

In Figur 3 ist eine Ausführungsform einer Düsenerweiterung dargestellt, welche dort mit dem Bezugszeichen 46 bezeichnet ist. Die Düsenerweiterung 46 ist mit einer insgesamt mit 48 bezeichneten Diffusoreinrichtung 48 verbunden.

Die Düsenerweiterung 46 erstreckt sich entlang einer Achse 12, welche der Achse 12 des ersten Mantelelements 26 (siehe Figur 2) entspricht, zwischen einem Düsenerweiterungseingang 50 und einem Düsenerweiterungsausgang 52.

Die Diffusoreinrichtung 48 erstreckt sich entlang der Achse 12 zwischen einem Diffusoreinrichtungseingang 54 und einem Diffusoreinrichtungsausgang 56.

Die Düsenerweiterung 46 begrenzt einen kreisförmigen, sich senkrecht zu der Achse 12 erstreckenden Strömungsquerschnitt 58, welcher sich von dem Düsenerweiterungseingang 50 hin zu dem Düsenerweiterungsausgang 52 erweitert. Die Diffusoreinrichtung 48 weist ebenfalls einen kreisförmigen Strömungsquerschnitt 60 auf, welcher sich von dem Diffusoreinrichtungseingang 54 hin zu dem Diffusoreinrichtungsausgang 56 erweitert.

Der Düsenerweiterungseingang 50 ist hinsichtlich seiner Geometrie und Größe auf den Brennkammerausgang einer in der Zeichnung nicht dargestellten Brennkammer eines Raketentriebwerks abgestimmt. In entsprechender Weise ist der Düsenerweiterungsausgang 52 in seiner Geometrie und Größe auf den Diffusoreinrichtungseingang 54 der Diffusoreinrichtung 48 abgestimmt.

Die Düsenerweiterung 46 weist einen insgesamt mit 62 bezeichneten Düsenmantel auf, welcher sich von dem Düsenerweiterungseingang 50 hin zu dem Düsenerweiterungsausgang 52 erstreckt.

Der Düsenmantel 62 umfasst das erste Mantelelement 26, welches insbesondere ein Innenteil 64 des Düsenmantels 62 bildet.

Der Düsenmantel 62 umfasst ferner ein zweites Mantelelement 66, welches direkt mit dem ersten Mantelelement 26 verbunden ist. Das zweite Mantelelement 66 ist durch galvanischen Auftrag auf das erste Mantelelement 26 hergestellt. Das zweite Mantelelement 66 ist aus einem metallischen Material und insbesondere Nickel hergestellt.

Das zweite Mantelelement 66 bildet vorzugsweise ein Außenteil 68 des Düsenmantels 62.

Das zweite Mantelelement 66 weist vorzugsweise eine Schichtstärke 70 von mindestens ungefähr 1 mm auf.

Um das zweite Mantelelement 66 herzustellen und mit dem ersten Mantelelement 26 zu verbinden, werden die umfangseitig offenen Kühlkanäle 36 des ersten Mantelelements 26 mit einem (in der Zeichnung aus Übersichtsgründen nicht dargestellten) Hilfsmaterial verfüllt. Hierbei kann es sich um ein elektrisch leitfähiges Wachsmaterial handeln. Anschließend wird das Material, aus welchem das zweite Mantelelement 66 gebildet ist, elektrochemisch auf die Außenflächen des ersten Mantelelements 26 aufgetragen. Hierbei werden die nach radial außen weisenden Flächen des ersten Mantelelements, also die Außenflächen der Materialstege 38 sowie der Kühlkanaleinsätze 44 galvanisch beschichtet. Die Außenflächen des in den Kühlkanälen 36 angeordneten Hilfsmaterials werden in entsprechender Weise beschichtet, sodass sich insgesamt eine durchgängige Materialschicht ergibt. Diese Materialschicht verschließt die umfangseitig offenen Kühlkanäle 36 des ersten Mantelelements, sodass das erste Mantelelement 26 und das zweite Mantelelement 66 gemeinsam umfangseitig geschlossene Kühlkanäle 36 begrenzen. Abschließend wird das Hilfsmaterial aus den Kühlkanälen 34 entfernt, beispielsweise durch Ausschmelzen.

Die Düsenerweiterung 46 umfasst ferner eine Kühlfluidversorgungseinrichtung 72, mittels welcher den Kühlkanälen 36 ein Kühlfluid zuführbar ist. Die Kühlfluidversorgungseinrichtung 72 umfasst eine ringförmige Verteilereinrichtung 74, welche einen Ringraum 76 begrenzt. Der Ringraum 76 steht über Kühlfluidleitungen 78, welche das zweite Mantelelement 66 durchsetzen, in fluidwirksamer Verbindung mit den Kühlkanälen 36. Auf diese Weise kann in diese Kühlfluidversorgungseinrichtung 72 eingetragenes Kühlfluid, beispielsweise Treibstoff eines Raketentriebwerks, den Kühlkanälen 36 zugeführt werden. Das Kühlfluid durchströmt die Kühlkanäle 36 von dem Düsenerweiterungseingang 50 hin zu dem Düsenerweiterungsausgang 52 und tritt dort an den Kühlkanalöffnungen 42 aus. Auf diese Weise kann die Düsenerweiterung 46 konvektiv gekühlt werden.

Das erwärmte Kühlfluid, welches an den Kühlkanalöffnungen 42 austritt, wird der Diffusoreinrichtung 48 derart zugeführt, dass eine Innenwandung 80 der Diffusoreinrichtung 48 film- und/oder strahlungsgekühlt wird.

Die Innenwandung 80 ist von einer im Wesentlichen trichterförmigen Diffusorwand 82 begrenzt, welche mittels einer Verbindungseinrichtung 84 mit dem Düsenmantel 62 der Düsenerweiterung 46 verbunden ist.

Das erste Mantelelement 26 lässt sich mit minimierten Restspannungen herstellen. Durch Herstellung des zweiten Mantelelements 66 an dem ersten Mantelelement 26 durch galvanischen Auftrag erfolgt keine thermische Belastung oder plastische Verformung an dem ersten Mantelelement 26. Der galvanische Auftrag ist ein "kaltes" Verfahren, bei dem beispielsweise keine lokale Überhitzung an Schweißnähten erfolgt und auch keine plastische Verformung des ersten Mantelelements 26 notwendig ist. Dadurch wird eine Düsenerweiterung hergestellt, welche minimierte Restspannungen aufweist.

Bei dem Betrieb von Düsenerweiterungen können Strukturtemperaturen oberhalb 1000°C auftreten. Bei derart hohen Temperaturen können Restspannungen zu erheblichen Deformationen und zu einem resultierenden Versagen einer Düsenerweiterung führen. Erfindungsgemäß wird eine Düsenerweiterung mit minimierten Restspannungen bereitgestellt, bei der dann die Versagensgefahr verringert ist.

Das erste Mantelelement ist einer Heißgasströmung ausgesetzt. Durch die Verwendung einer Nickellegierung als temperaturbeständige Legierung ergibt sich eine hohe Temperaturstabilität. Das zweite Mantelelement 66 mit der galvanischen Herstellung liegt auf der "kalten" Seite und wird geringeren Temperaturen ausgesetzt als das erste Mantelelement 26. Bei der galvanischen Herstellung sind grundsätzlich Mikroeinschlüsse von Elektrolyt unvermeidbar. Solche Einschlüsse können zur Zerstörung der Strukturen bei Erhitzung führen. Dadurch ergibt sich bei einfacher Herstellbarkeit eine hohe Fähigkeit, mechanische Lasten zu tragen. (Als Galvanikmaterial wird insbesondere hochfestes Galvanik-Nickel benutzt.) Durch die Herstellung des zweiten Mantelelements 66 aus Nickel ergibt sich eine feste und zuverlässige Verbindung mit dem ersten Mantelelement 26.

## Patentansprüche

1. Düsenerweiterung für ein Raketentriebwerk, mit einem Düsenmantel (62), der einen Strömungsquerschnitt (58) begrenzt, welcher sich von einem Düsenerweiterungseingang (50) hin zu einem Düsenerweiterungsausgang (52) erweitert, wobei der Düsenerweiterungseingang (50) mit einem Brennkammerausgang einer Brennkammer eines Raketentriebwerks verbindbar ist, wobei der Düsenmantel (62) mindestens einen umfangsseitig geschlossenen Kühlkanal (36) aufweist, und ein erstes Mantelelement (26) und ein zweites Mantelelement (66) umfasst, welche gemeinsam den mindestens einen Kühlkanal (36) begrenzen,
**dadurch gekennzeichnet, dass** das erste Mantelelement (26) einstückig ist, dass das erste Mantelelement (26) mindestens eine Materialaussparung (34) aufweist, welche den mindestens einen Kühlkanal (36) bildet, dass das zweite Mantelelement (66) mittels galvanischem Auftrag auf das erste Mantelelement (26) hergestellt ist und dass das erste Mantelelement (26) aus einer Nickellegierung und das zweite Mantelelement (66) aus Nickel hergestellt ist.

2. Düsenerweiterung nach Anspruch 1, **dadurch gekennzeichnet, dass** der Anteil von Nickel im ersten Mantelelement (26) zwischen ungefähr 60% bis 80% beträgt und/oder der Anteil von Nickel mindestens ungefähr 70% beträgt.

3. Düsenerweiterung nach einem der vorhergehenden Ansprüche, **dadurch gekennzeichnet, dass** das erste Mantelelement (26) bezogen auf das zweite Mantelelement (66) radial innen angeordnet ist.

4. Düsenerweiterung nach einem der vorhergehenden Ansprüche, **dadurch gekennzeichnet, dass** das erste Mantelelement (26) ein Innenteil (64) des Düsenmantels (62) bildet.

5. Düsenerweiterung nach einem der vorhergehenden Ansprüche, **dadurch gekennzeichnet, dass** das zweite Mantelelement (66) ein Außenteil (68) des Düsenmantels (62) bildet.

6. Düsenerweiterung nach einem der vorhergehenden Ansprüche, **dadurch gekennzeichnet, dass** das zweite Mantelelement (66) eine Schichtstärke (70) von mindestens ungefähr 1 mm aufweist.

7. Düsenerweiterung nach einem der vorhergehenden Ansprüche, **dadurch gekennzeichnet, dass** das Flächenverhältnis zwischen dem Düsenerweiterungsausgang (52) und dem Düsenerweiterungseingang (50) zwischen 20:1 und 2:1 beträgt.

8. Düsenerweiterung nach einem der vorhergehenden Ansprüche, **gekennzeichnet durch** eine Kühlfluidversorgungseinrichtung (72) zur Versorgung des mindestens einen Kühlkanals (36) mit einem Kühlfluid, welche insbesondere eine Verteilereinrichtung (74) umfasst, welche mit einer Mehrzahl von Kühlkanälen (36) fluidwirksam verbunden ist.

9. Düsenerweiterung nach einem der vorhergehenden Ansprüche, **dadurch gekennzeichnet, dass** der mindestens eine Kühlkanal (36) mindestens eine Kühlkanalöffnung (42) aufweist, aus welcher das Kühlfluid aus dem Kühlkanal (36) abführbar ist.

10. Düsenerweiterung nach einem der vorhergehenden Ansprüche, **gekennzeichnet durch** eine Diffusoreinrichtung (48), welche sich von einem Diffusoreinrichtungseingang (54) hin zu einem Diffusoreinrichtungsausgang (56) erweitert, wobei der Diffusoreinrichtungseingang (54) strömungswirksam mit dem Düsenerweiterungsausgang (52) verbindbar ist.

11. Verfahren zur Herstellung einer Düsenerweiterung für ein Raketentriebwerk, mit einem Düsenmantel (62), welcher mindestens einen umfangsseitig geschlossenen Kühlkanal (36) aufweist und mindestens ein erstes Mantelelement (26) und mindestens ein zweites Mantelelement (66) umfasst, welche gemeinsam den mindestens einen Kühlkanal (36) begrenzen,
**dadurch gekennzeichnet , dass** das erste Mantelelement (26) einstückig ist, dass erste Mantelelement (26) aus einer Nickellegierung und das zweite Mantelelement (66) aus Nickel hergestellt wird, dass das zweite Mantelelement (66) mittels galvanischem Auftrag auf das erste Mantelelement (26) hergestellt wird und dass das erste Mantelelement (26) mindestens eine Materialaussparung (34) aufweist, welche den mindestens einen Kühlkanal (36) bildet.

12. Verfahren nach Anspruch 11, **dadurch gekennzeichnet, dass** die mindestens eine Materialaussparung (36) durch Austrag aus einem massiven Material hergestellt wird.

13. Verfahren nach Anspruch 11 oder 12, **dadurch gekennzeichnet, dass** der umfangsseitig offene Kühlkanal (36) vor Herstellung des zweiten Mantelelements (66) mit einem Hilfsmaterial verfüllt wird und dass das Hilfsmaterial nach Herstellung des zweiten Mantelelements (66) aus dem umfangsseitig geschlossenen Kühlkanal (36) entfernt wird.

14. Verfahren nach Anspruch 13, **dadurch gekennzeichnet, dass** das Hilfsmaterial elektrisch leitfähig ist und/oder das Hilfsmaterial ein Wachsmaterial ist.

15. Verfahren nach einem der Ansprüche 11 bis 14, **dadurch gekennzeichnet, dass** das erste Mantelelement (26) zur Elimination von Restspannungen geglüht wird.
